# EUROPEAN PATENT APPLICATION

(11) **EP 4 187 955 A1**
(43) Date of publication of application: **31.05.2023**
(21) Application number: 22208153.1
(22) Date of filing: 17.11.2022
(51) Int. Cl.: H04W 12/106, H04W 84/12

(54) **METHOD AND APPARATUS FOR APPLYING INTEGRITY PROTECTION TO CONTROL INFORMATION SUBFIELD OR OPERATING MODE FIELD**

(30) Priority: 26.11.2021 US 202163283316 P; 15.11.2022 US 202217987829
(71) Applicant: MediaTek Inc., Hsin-Chu 300 (TW)
(72) Inventor: GUO, Ming-Wang, 30078 Hsinchu City (TW)
(74) Representative: Hoefer & Partner Patentanwälte mbB

(57) **Abstract**

An integrity protection method is employed by a first wireless communication device (102) that communicates with a second wireless communication device (104), and includes generating a frame and transmitting the frame to the second wireless communication device (104) . The step of generating the frame includes applying integrity protection to a control information subfield (310), or applying integrity protection to an operating mode field included in a frame body of the frame.

## Description

### Field of the Invention

The present invention relates to wireless communications, and more particularly, to a method for applying integrity protection to a control information subfield or an operating mode field and an associated wireless communication apparatus.

### Background of the Invention

In accordance with IEEE 802.11ax standard, the media access control (MAC) header has a high throughput (HT) Control field, and the HT Control field has three variants: the HT variant, the very high throughput (VHT) variant, and the high efficiency (HE) variant. An A-control subfield of the HE variant HT Control field can contain one or more Control subfields, each including a Control Information subfield and a Control Identity (ID) subfield that indicates the type of information carried in the Control Information subfield. For example, a Control subfield may be an Operating Mode (OM) Control subfield that contains information related to the OM change of a station (STA) transmitting the frame containing this information. However, in accordance with IEEE 802.11ax, no integrity check is applied to the Control subfield, including the Control ID subfield and the Control Information subfield, in the HE variant HT Control field. If a fake OM Control subfield is sent by an attacker and accepted by a peer device, it may cause media utilization to be lower than expectation.

Furthermore, in accordance with IEEE 802.11-2016 standard, an Operating Mode field is present in an Operating Mode Notification frame and an Operating Mode Notification element. There is no integrity check applied to the Operating Mode field. If a fake Operating Mode field is sent by an attacker and accepted by a peer device, it may cause media utilization to be lower than expectation.

### Summary of the Invention

This in mind, the present invention aims at providing a method for applying integrity protection to a Control Information subfield (which is specified in 802.11ax standard or a later standard) or an Operating Mode Field (which is specified in 802.11-2016 standard or a later standard) and an associated wireless communication apparatus.

This is achieved by integrity protection methods and a wireless communication device according to the independent claims. The dependent claims pertain to corresponding further developments and improvements.

As will be seen more clearly from the detailed description following below, the claimed integrity protection method includes: generating a first frame, comprising: applying integrity protection to a control information subfield; and transmitting the first frame to a wireless communication device.

The claimed integrity protection method includes: generating a first frame, comprising: applying integrity protection to an operating mode field included in a frame body of the first frame; and transmitting the first frame to a wireless communication device.

The claimed wireless communication device includes a control circuit and a network interface circuit. The control circuit is arranged to generate a frame, where integrity protection is applied to a control information subfield, or an operating mode field included in a frame body of the frame. The network interface circuit is arranged to transmit the frame to another wireless communication device.

### Brief Description of the Drawings

In the following, the invention is further illustrated by way of example, taking reference to the accompanying drawings. Thereof
FIG. 1 is a diagram illustrating a wireless communication system according to an embodiment of the present invention,
FIG. 2 is a diagram illustrating a frame format of an 802.11ax frame,
FIG. 3 is a diagram illustrating a frame format of an 802.11ax frame with integrity protection of a Control subfield (which includes a Control ID subfield and a Control Information subfield) according to an embodiment of the present invention,
FIG. 4 is a flowchart illustrating a request-reply mechanism for integrity protection of a Control subfield (which includes a Control ID subfield and a Control Information subfield) according to an embodiment of the present invention,
FIG. 5 is a flowchart illustrating a method of applying integrity protection to an Operating Mode field present in an Operating Mode Notification frame (which is an Action frame of category VHT) according to an embodiment of the present invention,
FIG. 6 is a flowchart illustrating a request-reply mechanism for integrity protection of an Operating Mode Notification element according to an embodiment of the present invention, and
FIG. 7 is a flowchart illustrating a method of applying integrity protection to an Operating Mode Notification element in a Class 3 Action frame according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

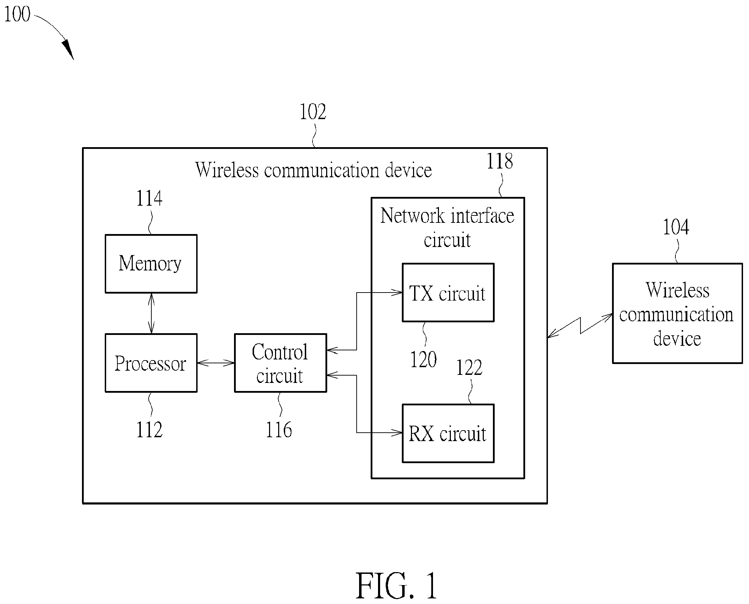

FIG. 1 is a diagram illustrating a wireless communication system according to an embodiment of the present invention. The wireless communication system 100 includes a plurality of wireless communication devices 102 and 104. For example, the wireless communication system 100 is a wireless fidelity (Wi-Fi) system, including an access point (AP) and a non-AP station (STA). In one embodiment of the present invention, the wireless communication device 102 is an AP, and the wireless communication device 104 is a non-AP STA. In another embodiment of the present invention, the wireless communication device 102 is a non-AP STA, and the wireless communication device 104 is an AP. In other words, the proposed integrity protection scheme can be employed by any of AP and Non-AP STA. For brevity and simplicity, only two wireless communication devices 102 and 104 are shown in FIG. 1. In practice, the wireless communication system 100 is allowed to have more than two wireless communication devices, including an AP and more than one non-AP STA in the same basic service set (BSS) . By way of example, but not limitation, both of wireless communication devices 102 and 104 may be in compliance with IEEE 802.11-2016 or a later standard, and/or may be in compliance with IEEE 802.11ax or a later standard. To put it simply, any Wi-Fi device using the proposed integrity protection scheme falls within the scope of the present invention.

The wireless communication devices 102 and 104 may employ the same or similar hardware architecture. Taking the wireless communication device 102 for example, it includes a processor 112, a memory 114, a control circuit 116, and a network interface circuit 118, where the network interface circuit 118 includes a transmitter (TX) circuit 120 and a receiver (RX) circuit 122. The memory 114 is arranged to store a program code. The processor 112 is arranged to load and execute the program code to manage the wireless communication device 102. The control circuit 116 is arranged to control wireless communications with the wireless communication device 104. In a case where the wireless communication device 102 is an AP and the wireless communication device 104 is a non-AP STA, the control circuit 116 controls the TX circuit 120 of the network interface circuit 118 to deal with downlink (DL) traffic between AP and non-AP STA, and controls the RX circuit 122 of the network interface circuit 118 to deal with uplink (UL) traffic between AP and non-AP STA. In another case where the wireless communication device 102 is a non-AP STA and the wireless communication device 104 is an AP, the control circuit 116 controls the TX circuit 118 of the network interface circuit 118 to deal with UL traffic between non-AP and AP, and controls the RX circuit 122 of the network circuit 118 to deal with DL traffic between non-AP STA and AP.

It should be noted that only the components pertinent to the present invention are illustrated in FIG. 1. In practice, the wireless communication device 102 may include additional components to achieve designated functions, and the wireless communication device 104 may include additional components to achieve designated functions.

In this embodiment, the wireless communication device 102/104 supports a feature of applying integrity protection (e.g., encryption and/or integrity check) to a Control subfield (particularly, Control Information subfield included in Control subfield) as specified in IEEE 802.11ax standard or a later standard, and/or supports a feature of applying integrity protection (e.g., encryption and/or integrity check) to an Operating Mode field as specified in IEEE 802.11-2016 standard or a later standard. Further details of the proposed integrity protection scheme are described with reference to the accompanying drawings.

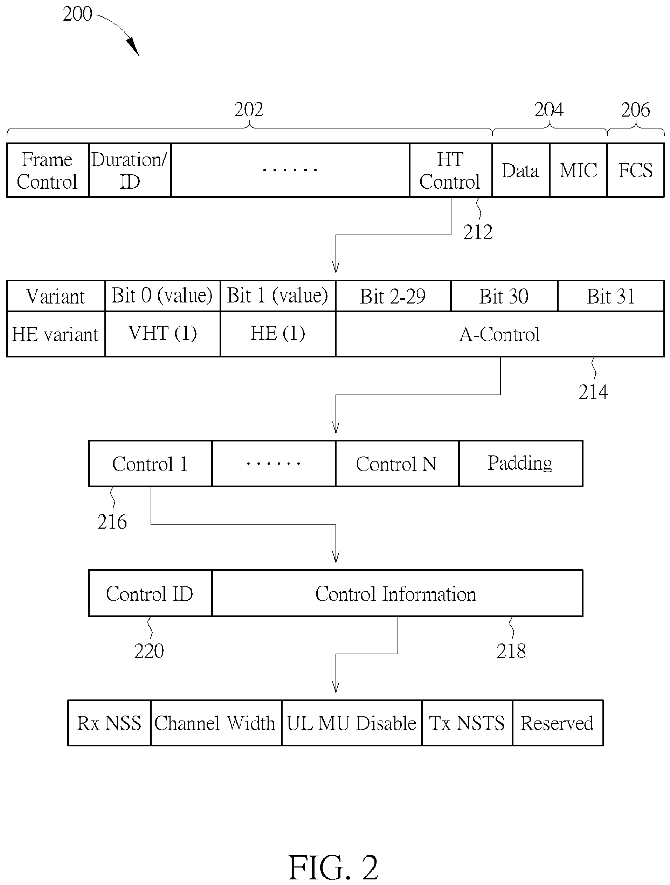

FIG. 2 is a diagram illustrating a frame format of an 802.11ax frame. One 802.11ax frame 200 includes three major parts: a frame header 202, a frame body 204, and a frame trailer 206. The frame header 202 is a media access control (MAC) header including a Frame Control field, a Duration/ID field, an HT Control field 212, etc. The frame body 204 includes network data followed by a Message Integrity Check (MIC) field. The frame trailer 206 contains the frame check sequence (FCS). Regarding the HT Control field 212 that is pertinent to the proposed integrity protection scheme of the present invention, it has three variants: the HT variant, the VHT variant, and the HE variant. The variant formats are differentiated by the values of Bit 0 and Bit 1. As shown in FIG. 2, the HE variant HT Control field is used due to Bit 0 = 1 and Bit 1 = 1. An A-control subfield 214 of the HE variant HT Control field 212 can contain one or more Control subfields 216, each including a Control Information subfield 218 and a Control ID subfield 220 that indicates the type of information carried in the Control Information subfield 218. For example, Control Information subfield 218 is for UL Multi-user (MU) response scheduling (UMRS) Control if Control ID value = 0, Control Information subfield 218 is for Operating mode (OM) Control if Control ID value = 1, Control Information subfield 218 is for HE link adaptation (HLA) Control if Control ID value = 2, Control Information subfield 218 is for Buffer status report (BSR) control if Control ID value = 3, Control Information subfield 218 is for UL power headroom (UPH) control if Control ID value = 4, Control Information subfield 218 is for Bandwidth query report (BQR) Control if Control ID value = 5, and Control Information subfield 218 is for Command and status (CAS) Control if Control ID value = 6. Suppose that Control ID value = 1, the Control Information subfield 218 is for OM control to indicate a change in its receive (Rx) and/or transmit (Tx) operating parameters, and includes Rx NSS (number of spatial streams) subfield, Channel Width subfield, UL MU Disable subfield, and Tx NSTS (maximum number of space-time streams) subfield.

In accordance with IEEE 802.11ax, no integrity check is applied to the Control subfield, including Control ID subfield 220 and Control Information subfield 218, in the HT Control field 212 (particularly, HE variant HT Control field 212), where the HT Control field 212 is present in QoS Data, QoS Null, and Class 3 Management frames. To address this issue, the present invention proposes applying integrity protection to a Control Information subfield (e.g., a Control Information subfield for UMRS Control, a Control Information subfield for OM Control, a Control Information subfield for HLA Control, a Control Information subfield for BSR Control, a Control Information subfield for UPH Control, a Control Information subfield for BQR Control, or a Control Information subfield for CAS Control) . In this embodiment, the control circuit 116 generates a frame, and the network interface circuit 118 (particularly, TX circuit 120 of network interface circuit 118) transmit the frame from the wireless communication device 102 to the wireless communication device 104, where the control circuit 116 applies integrity protection to a Control Information subfield included in the frame. Specifically, the integrity protection may include integrity check and/or encryption. Hence, a Control subfield (which includes a Control ID subfield and a Control Information subfield) carried by the frame transmitted from the wireless communication device 102 to the wireless communication device 104 is protected by integrity check and/or encryption.

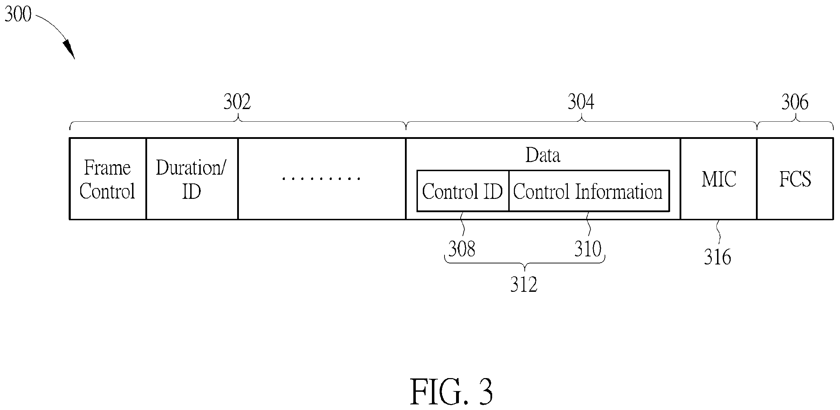

In accordance with a first integrity protection scheme of the Control subfield (e.g., OM Control subfield) proposed by the present invention, the control circuit 116 does not include a Control subfield (which includes a Control ID subfield and a Control Information subfield) in an HT Control field when generating a frame to be sent from the wireless communication device 102 to the wireless communication device 104. FIG. 3 is a diagram illustrating a frame format of an 802.11ax frame with integrity protection of a Control subfield (which includes a Control ID subfield and a Control Information subfield) according to an embodiment of the present invention. The 802.11ax frame 300 includes a frame header 302, a frame body 304, and a frame trailer 306. The Control subfield 312 (which includes a Control ID subfield 308 and a Control Information subfield 310) is included in the frame body 304 of the 802.11ax frame 300. Since the Control subfield 312 is treated as a part of the network data, the Control subfield 312 is involved in computation of the MIC value carried by the MIC field 316. Hence, the MIC value carried by the MIC field 316 provides integrity check for the Control subfield 312 (particularly, Control Information subfield 310 of Control subfield 312). In this embodiment, the 802.11ax frame 300 is a management frame being a unicast (UC) action frame with encryption, such that the frame body 304 is encryption protected. By way of example, but not limitation, the encoding manner of the action frame may be properly modified and extended to support integrity protection of original A-control fields.

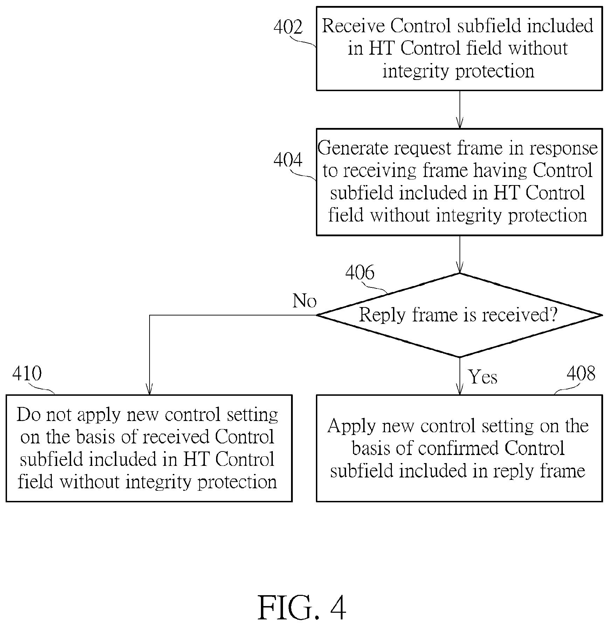

In accordance with a second integrity protection scheme of the Control subfield (e.g., OM Control subfield) proposed by the present invention, a request-reply mechanism is used to confirm correctness of a received Control subfield included in an HT Control field without integrity check. FIG. 4 is a flowchart illustrating a request-reply mechanism for integrity protection of a Control subfield (which includes a Control ID subfield and a Control Information subfield) according to an embodiment of the present invention. At step 402, the wireless communication device 102 (particularly, RX circuit 122 of network interface circuit 118) receives a Control subfield included in an HT Control field without integrity protection that is sent by the wireless communication device 104. For example, the HT Control field without integrity protection may be transmitted by a QoS data frame, a QoS Null frame, or a Class 3 Management frame. At step 404, the control circuit 116 generates a request frame in response to receiving the frame having the Control subfield included in the HT Control field without integrity protection, and the network interface circuit 118 (particularly, TX circuit 120 of network interface circuit 118) transmits the request frame to the wireless communication device 104. In this embodiment, the request frame with the received Control subfield is transmitted from the wireless communication device 102 to query the wireless communication device 104. For example, the received Control subfield is included in a frame body of the request frame, such that a MIC value carried by a MIC field of the request frame provides integrity check for the received Control subfield; and the request frame is a management frame being a unicast (UC) action frame with encryption, such that the frame body of the request frame is encryption protected.

At step 406, the control circuit 116 checks if a reply frame (which is generated from the wireless communication device 104 in response to the request frame sent by the wireless communication device 102) is received. If the wireless communication device 104 determines that the Control subfield included in the request frame is the same as the Control subfield in the HT Control field previously sent to the wireless communication device 102, the wireless communication device 104 replies with the reply frame that includes the confirmed Control subfield that is the same as the Control subfield in the HT Control field previously sent to the wireless communication device 102. For example, the confirmed Control subfield is included in a frame body of the reply frame, such that a MIC value carried by a MIC field of the reply frame provides integrity check for the confirmed Control subfield; and the reply frame is a management frame being a UC action frame with encryption, such that the frame body of the reply frame is encryption protected. At step 408, the control circuit 116 applies the new control setting on the basis of the confirmed Control subfield included in the reply frame.

However, if the wireless communication device 104 determines that the Control subfield included in the request frame is different from the Control subfield in the HT Control field previously sent to the wireless communication device 102, the wireless communication device 104 does not reply with the reply frame. At step 410, the control circuit 116 does not apply the new control setting on the basis of the received Control subfield included in the HT Control field without integrity protection.

In accordance with a third integrity protection scheme of the Control subfield (e.g., OM Control subfield) proposed by the present invention, modified additional authentication data (AAD) construction is employed to obtain AAD for computation of a MIC value. In contrast to the typical AAD construction not including the HT Control field, the modified AAD construction, including the HT Control field, is employed by the control circuit 116 to generate a frame to be sent from the wireless communication device 102 to the wireless communication device 104 through the network interface circuit 118 (particularly, TX circuit 120 of network interface circuit 118) . Once HT Control field is included in AAD construction, the MIC field should be appended for QoS Data frame, QoS Null frame, and Class 3 Management frame. In this way, a MIC value carried by a MIC field of the frame provides integrity check for the Control subfield included in the HT Control field. In some embodiments of the present invention, Frame_control.Protocol_Version == 3 in the frame header may be used to indicate the modified AAD construction including HT Control field. In some embodiments of the present invention, Frame_control.More Fragments == 0 && (Fragment Number field == 0xn) may be used to indicate the modified AAD construction including HT Control field, where n may be a constant value selected from a range of 0x4 - 0xf. However, these examples are for illustrative purposes only, and are not meant to be limitations of the present invention.

In accordance with IEEE 802.11-2016 standard, no integrity check is applied to the Operating Mode field present in the Operating Mode Notification frame and the Operating Mode Notification element. For example, the Operating Mode field may include Channel Bandwidth subfield, 160/80+80 BW subfield, No LDPC (Low Density Parity Check) subfield, Rx NSS subfield, and Rx NSS Type subfield. To address this issue, the present invention proposes applying integrity protection to an Operating Mode field included in a frame body of a management frame. In this embodiment, the control circuit 116 generates a frame, and the network interface circuit 118 (particularly, TX circuit 120 of network interface circuit 118) transmits the frame from the wireless communication device 102 to the wireless communication device 104, where the control circuit 116 applies integrity protection to an Operating Mode field included in a frame body of the frame. Specifically, the integrity protection may include integrity check and/or encryption, such that the Operating Mode field of VHT Action frame carried by the frame transmitted from the wireless communication device 102 to the wireless communication device 104 is protected by integrity check and/or encryption.

In accordance with a first integrity protection scheme of the Operating Mode field proposed by the present invention, an Action frame of category VHT is added to a robust management frame list. The Operating Mode field is present in the Operating Mode Notification frame that is an Action frame of category VHT. However, in accordance with IEEE 802.11-2016 standard, the Action frame of category VHT is not a robust management frame and has no encryption and integrity check. When the integrity protection scheme is enabled, the control circuit 116 applies integrity protection to the Operating Mode field when generating the Operating Mode Notification frame to be sent from the wireless communication device 102 to the wireless communication device 104 through the network interface circuit 118 (particularly, TX circuit 120 of network interface circuit 118), where the integrity protection may include encryption and/or integrity check.

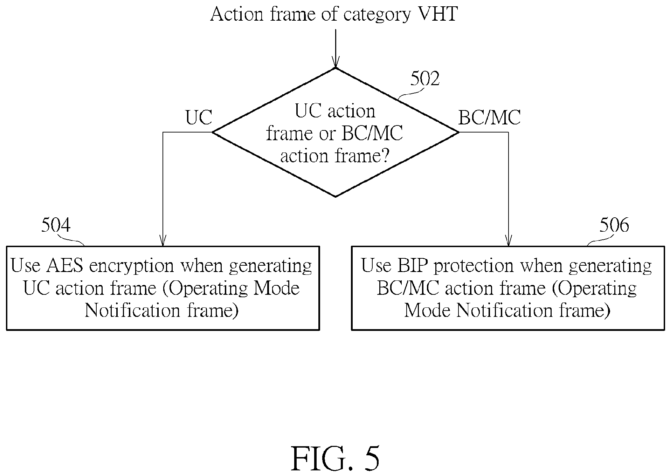

FIG. 5 is a flowchart illustrating a method of applying integrity protection to an Operating Mode field present in an Operating Mode Notification frame (which is an Action frame of category VHT) according to an embodiment of the present invention. At step 502, the control circuit 502 checks if the Operating Mode Notification frame to be sent is a unicast (UC) action frame or a broadcast (BC)/multicast (MC) action frame. When the Operating Mode Notification frame is a UC action frame, the control circuit 116 uses Advanced Encryption Standard (AES) encryption when generating the UC action frame (Step 504). Specifically, a MIC value carried by a MIC field of a frame body of the UC action frame provides integrity check for the Operating Mode field, and the frame body of the UC action frame is AES encryption protected. When the Operating Mode Notification frame is a BC/MC action frame, the control circuit 116 uses Broadcast Integrity protocol (BIP) protection when generating the BC/MC action frame (Step 506). Specifically, a MIC value carried by a MIC field of a frame body of the BC/UC action frame provides integrity check for the Operating Mode field.

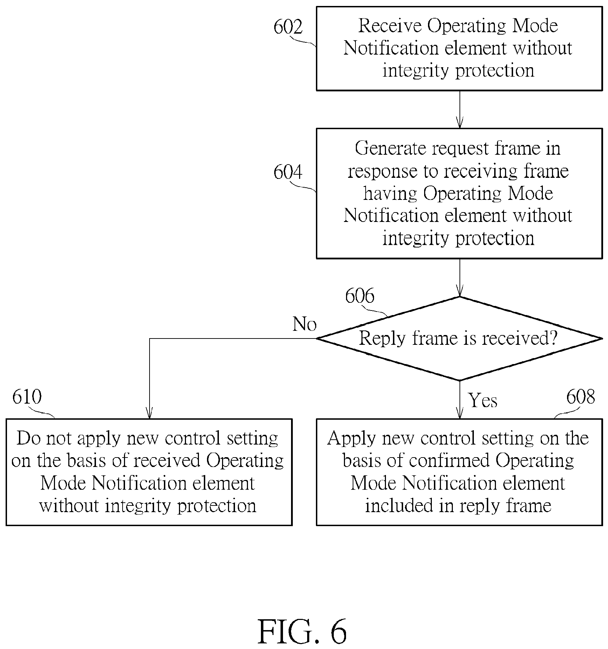

In accordance with a second integrity protection scheme of the Operating Mode field proposed by the present invention, a request-reply mechanism is used to confirm correctness of a received Operating Mode field present in an Operating Mode Notification element from a connected AP, and the request-reply mechanism is not needed to confirm correctness of a received Operating Mode field present in an Operating Mode Notification element from a non-connected AP. For example, an action frame with this information element (IE) has no integrity check, and may be a Class 1 frame (e.g., a Beacon frame or a Probe response frame) or a Class 2 frame (e.g., an Association request frame, a Reassociation request frame, an Association response frame, or a Reassociation response frame). When the wireless communication device 102 receives the Operating Mode Notification element without integrity check from one of the above management frames, the control circuit 116 confirms correctness of a received Operating Mode Notification element through the request-reply mechanism. FIG. 6 is a flowchart illustrating a request-reply mechanism for integrity protection of an Operating Mode Notification element according to an embodiment of the present invention. At step 602, the wireless communication device 102 (particularly, RX circuit 122 of network interface circuit 118) receives an Operating Mode Notification element without integrity protection from the wireless communication device 104. For example, the Operating Mode Notification element without integrity protection may be transmitted by a Beacon frame, an Association/Reassociation request frame, an Association/Reassociation response frame, or a Probe response frame. At step 604, the control circuit 116 generates a request frame in response to receiving the frame having the Operating Mode Notification element without integrity protection, and the network interface circuit 118 (particularly, TX circuit 120 of network interface circuit 118) transmits the request frame to the wireless communication device 104. In this embodiment, the request frame with the received Operating Mode Notification element is transmitted from the wireless communication device 102 to query the wireless communication device 104. For example, a MIC value carried by a MIC field of the request frame provides integrity check for the received Operating Mode Notification element; and the request frame is a management frame being a UC action frame with encryption, such that the frame body of the request frame is encryption protected.

At step 606, the control circuit 116 checks if a reply frame (which is generated from the wireless communication device 104 in response to the request frame sent by the wireless communication device 102) is received. If the wireless communication device 104 determines that the Operating Mode Notification element included in the request frame is the same as the Operating Mode Notification element previously sent to the wireless communication device 102, the wireless communication device 104 replies with the reply frame that includes the confirmed Operating Mode Notification element that is the same as the Operating Mode Notification element previously sent to the wireless communication device 102. For example, a MIC value carried by a MIC field of the reply frame provides integrity check for the confirmed Operating Mode Notification element; and the reply frame is a management frame being a UC action frame with encryption, such that the frame body of the reply frame is encryption protected. At step 608, the control circuit 116 applies the new control setting on the basis of the confirmed Operating Mode Notification element included in the reply frame.

However, if the wireless communication device 104 determines that the Operating Mode Notification element included in the request frame is different from the Operating Mode Notification element previously sent to the wireless communication device 102, the wireless communication device 104 does not reply with the reply frame. At step 610, the control circuit 116 does not apply the new control setting on the basis of the received Operating Mode Notification element without integrity protection.

In accordance with a third integrity protection scheme of the Operating Mode field proposed by the present invention, the control circuit 116 applies integrity protection to the Operating Mode Notification element when generating a Class 3 Action frame to be sent from the wireless communication device 102 to the wireless communication device 104 through the network interface circuit 118 (particularly, TX circuit 120 of network interface circuit 118), where the integrity protection may include encryption and/or integrity check.

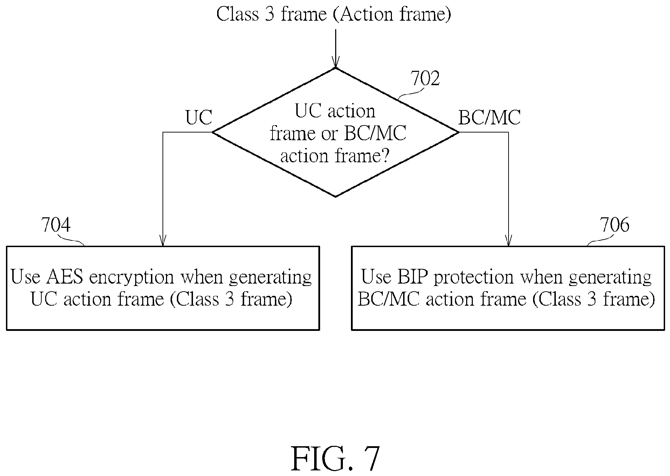

FIG. 7 is a flowchart illustrating a method of applying integrity protection to an Operating Mode Notification element in a Class 3 Action frame according to an embodiment of the present invention. At step 702, the control circuit 502 checks if the Class 3 Action frame to be sent is a UC action frame or a BC/MC action frame. When the Class 3 Action frame is a UC action frame, the control circuit 116 uses AES encryption when generating the UC action frame (Step 704). Specifically, a MIC value carried by a MIC field of a frame body of the UC action frame provides integrity check for the Operating Mode Notification element, and the frame body of the UC action frame is AES encryption protected. When the Class 3 Action frame is a BC/MC action frame, the control circuit 116 uses BIP protection when generating the BC/MC action frame (Step 706). Specifically, a MIC value carried by a MIC field of a frame body of the BC/UC action frame provides integrity check for the Operating Mode Notification element. To put it simply, after association setup (i.e., port secured), if Operating Mode Notification element is included in a management frame, BIP protection is enabled for the management frame in BC/MC, and the management frame in UC is encrypted with AES.

## Claims

1. An integrity protection method **characterized by**:
generating a first frame (300), comprising:
applying integrity protection to a control information subfield (310); and
transmitting the first frame (300) to a wireless communication device (104).

2. The integrity protection method of claim 1, **characterized in that** the first frame (300) comprises a frame header (302) and a frame body (304), and the control information subfield (310) is included in the frame body (304) instead of a high throughput control field of the frame header (302).

3. The integrity protection method of claim 2, **characterized in that** the first frame (300) is a unicast action frame with encryption.

4. The integrity protection method of claim 1, **characterized in that** generating the first frame comprises:
generating the first frame in response to receiving a second frame from the wireless communication device (104), wherein the second frame comprises a frame header that includes the control information subfield.

5. The integrity protection method of claim 4, **characterized in that** the first frame is a unicast action frame with encryption that is arranged to query a control information subfield sent by the wireless communication device (104).

6. The integrity protection method of claim 4, **characterized in that** the integrity protection method further comprises:
receiving a third frame from the wireless communication device (104), wherein the third frame is replied in response to the first frame.

7. The integrity protection method of claim 6, **characterized in that** the third frame is a unicast action frame with encryption, and includes a control information subfield confirmed by the wireless communication device (104).

8. The integrity protection method of claim 1, **characterized in that** the first frame comprises a frame header that includes the control information subfield, and the integrity protection comprises additional authentication data construction including the control information subfield.

9. An integrity protection method **characterized by**:
generating a first frame, comprising:
applying integrity protection to an operating mode field included in a frame body of the first frame; and
transmitting the first frame to a wireless communication device (104) .

10. The integrity protection method of claim 9, **characterized in that** the first frame is an operating mode notification frame that is an action frame of category very high throughput, and the operating mode field is present in the operating mode notification frame.

11. The integrity protection method of claim 9, **characterized in that** the operating mode field is present in an operating mode notification element of the frame body of the first frame.

12. The integrity protection method of claim 11, **characterized in that** the first frame is a Class 3 frame.

13. The integrity protection method of claim 11, **characterized in that** generating the first frame comprises:
generating the first frame in response to receiving a second frame from the wireless communication device (104), wherein the second frame comprises the operating mode field.

14. The integrity protection method of claim 13, **characterized in**
**that** the integrity protection method further comprises:
receiving a third frame from the wireless communication device (104), wherein the third frame is replied in response to the first frame, and includes an operating mode field confirmed by the wireless communication device (104).

15. A wireless communication device (102) **characterized by**:
a control circuit (116), arranged to generate a frame, comprising:
applying integrity protection to a control information subfield (310); or
applying integrity protection to an operating mode field included in a frame body of the frame; and
a network interface circuit (118), arranged to transmit the frame to another wireless communication device (104).
